# EUROPÄISCHE PATENTSCHRIFT

(11) **EP 2 454 126 B1**
(45) Veröffentlichungstag und Bekanntmachung des Hinweises auf die Patenterteilung: **20.03.2013**
(21) Anmeldenummer: 10732874.2
(22) Anmeldetag: 10.07.2010
(51) Int. Cl.: B60R 21/0132, B60R 22/40

(54) **FAHRZEUGSICHERHEITSGURTSYSTEM**
VEHICLE SEAT BELT SYSTEM
DISPOSITIF DE CEINTURE DE SÉCURITÉ POUR VÉHICULE

(30) Priorität: 17.07.2009 DE 102009033689
(43) Veröffentlichungstag der Anmeldung: 23.05.2012
(73) Patentinhaber: TRW Automotive GmbH, 73553 Alfdorf (DE)
(72) Erfinder: MAGES, Mark, 73553 Alfdorf (DE)
(74) Vertreter: Prehn, Manfred
(86) Internationale Anmeldenummer: PCT/EP2010/004220
(87) Internationale Veröffentlichungsnummer: WO 2011/006626

(56) Entgegenhaltungen:
- EP-A1- 1 632 400
- EP-A1- 1 745 995
- EP-A2- 1 864 867
- WO-A1-2008/041904
- DE-A1- 10 303 148
- US-A1- 2005 150 704
- US-A1- 2008 119 996

## Beschreibung

Die Erfindung betrifft ein Fahrzeugsicherheitsgurtsystem mit einem reversiblen Gurtstraffer, der eine Gurtanzugkraft in einem oder mehreren vorbestimmten Niveaus auf ein Gurtband eines Sicherheitsgurtes aufbringen kann.

Eine reversible Straffung des Gurtbandes wird nicht nur eingesetzt, um im Vorfeld eines Unfalls die Gurtlose möglichst zu eliminieren und den Fahrzeuginsassen soweit als möglich an einer Vorverlagerung zu hindern, sondern kann auch eine Komfortfunktion erfüllen und dem Fahrzeuginsassen in bestimmten Fahrsituationen durch ein strafferes Anliegen des Gurtbandes mehr Sicherheit vermittelt.

Die hierfür eingesetzten Gurtstraffer können durch eine geeignete Ansteuerung ein vergleichsweise sanftes und nahezu unbemerktes Anlegen des Gurtbandes an den Körper erreichen, wobei sich die Gurtanzugkraft stetig steigern und senken lässt. Eine solche Ansteuerung ist besonders beim Durchfahren einer Kurve interessant, wo eine komfortable Straffung des Gurtes den Fahrer beim Auftreten von Querbeschleunigungen besser im Sitz fixiert und entsprechend einen besseren Seitenhalt vermittelt. WO 2008/041904 A offenbart ein System nach dem Oberbegriff des Anspruchs 1.

Aufgabe der Erfindung ist es, ein verbessertes Fahrzeugsicherheitsgurtsystem zu schaffen.

Hierzu weist ein Fahrzeugsicherheitsgurtsystem einen reversiblen Gurtstraffer auf, der eine Gurtanzugkraft in mehreren vorbestimmten Niveaus auf ein Gurtband eines Sicherheitsgurts aufbringen kann, und eine Steuereinheit zur Ansteuerung des Gurtstraffers sowie eine Vorrichtung zur Erfassung eines Straßenverlaufs vor dem Fahrzeug und zur Erkennung von vor dem Fahrzeug liegenden Kurven. Die Steuereinheit veranlasst, die Gurtanzugkraft auf einem erhöhten Niveau zu halten, wenn sich im Straßenverlauf an eine gerade durchfahrene Kurve in einer vorbestimmten Distanz eine weitere Kurve anschließt. Das Kraftniveau liegt dabei über dem Kraftniveau, das der Gurtstraffer normalerweise bei gerader Strecke aufbringt. Auf diese Weise wird erreicht, dass die Straffung dem Fahrzeuginsassen auch auf einer kurvenreichen Stecke stets ein sicheres Gefühl gibt.

Aufgrund der vorausschauenden Steuerung lassen sich beispielsweise Schwankungen im Niveau der Gurtanzugkraft entlang einer kurvenreichen Strecke im Wesentlichen vermeiden, was dem Fahrzeuginsassen ein sichereres Gefühl gibt.

Mit dem erfindungsgemäßen System lässt sich auch in einem Fahrzeugsitz mit einem eher geringen Seitenhalt eine ausreichende Fixierung des Fahrzeuginsassen selbst beim sportlichen Durchfahren von Kurven erreichen.

Die Steuereinheit kann so ausgebildet sein, dass sie in Abhängigkeit vom ermittelten Straßenverlauf bereits ein Einsetzen der Tätigkeit des Gurtstraffers zur Erhöhung einer Gurtanzugkraft veranlasst, bevor das Fahrzeug in eine Kurve einfährt. Auf diese Weise wird der Fahrzeuginsasse bereits vor Eintritt des Fahrzeugs in die Kurve fester im Sitz fixiert, und eine seitliche Verlagerung des Insassen durch Querbeschleunigungskräfte in der Kurve wird von vornherein minimiert. Konventionell aktivierte Gurtsysteme werden hingegen erst aktiviert, wenn Sensoren im Fahrzeug ein Erreichen eines Schwellwertes feststellen. Dann ist aber das Fahrzeug bereits in die Kurve eingefahren.

Es ist von Vorteil für den Komfort des Fahrzeuginsassen, wenn sich die vom Gurtstraffer aufgebrachte Kraft stetig verändert. Das Niveau der Gurtanzugkraft ist in diesem Fall zwischen einem Minimal- und einem Maximalwert beliebig einstellbar.

Aus den Daten der Vorrichtung zur Erfassung des Straßenverlaufs kann optional eine maximale Krümmung der gerade durchfahrenen Kurve bzw. der folgenden Kurven im weiteren Straßenverlauf bestimmt werden. Unter Kenntnis dieser maximalen Krümmung, also dem minimalen Radius der betreffenden Kurve, kann ein optimaler Wert für die Gurtanzugkraft sowie eine angepasste Steigerungsrate der Gurtanzugkraft ermittelt und bereits vor Eintritt in die Kurve ein langsames Ansteigen der Gurtanzugkraft initiiert werden.

Vorzugsweise umfasst die Vorrichtung zur Erfassung des Straßenverlaufs einen GPS-Empfänger und Kartendaten der gerade befahrenen Strecke, z.B. in Form eines bekannten Navigationssystems. Anstelle der GPS-Daten bzw. - Informationen können auch die entsprechenden Daten eines anderen GNSS-Systems (Globales Navigations-Satelliten System) genutzt werden, z. B. Gallileo. So kann eine vorausschauende Auswertung des Straßenverlaufs auf einfache Weise erreicht werden.

Alternativ oder zusätzlich kann die Vorrichtung zur Erfassung des Straßenverlaufs eine Videokamera und Mittel zur Bestimmung eines Verlaufs wenigstens einer Fahrbahnmarkierung vor dem Fahrzeug aus den Videodaten umfassen.

Eine andere Möglichkeit zur Gewinnung des Straßenverlaufs ergibt sich, alternativ oder zusätzlich, wenn die Vorrichtung zur Erfassung des Straßenverlaufs ein LIDAR-Gerät und Mittel zur Bestimmung eines Verlaufs wenigstens einer Fahrbahnmarkierung vor dem Fahrzeug aus den LIDAR-Daten umfasst.

Da der Verlauf der Fahrbahnmarkierung, zum Beispiel eines Randstreifens der Fahrbahn oder eines Mittelstreifens, in der Regel den Fahrbahnverlauf und eine Kurvenkrümmung sehr exakt widerspiegelt, lässt sich der Straßenverlauf aus diesen Daten mit hoher Genauigkeit generieren.

Wenn die Karten-/GPS-Daten bzw. die Umgebungserfassung darauf hinweisen, dass eine kritische Fahrsituation bevorsteht, können zusätzlich ein- oder mehrstufige Maßnahmen in Form von einer Information des Fahrers, einer Warnung des Fahrers und/oder einem autonomen Eingriff in die Fahrzeugführung vorgenommen.

Warnhinweise oder Eingriffe können beispielsweise erfolgen, wenn die aktuelle Fahrgeschwindigkeit die voraussichtlich querdynamisch umsetzbare Kurvengeschwindigkeit der bevorstehenden Kurve deutlich übersteigt. In diesem Fall wird der Fahrer zunächst durch eine Information auf die Situation hingewiesen werden, bei Nichtbeachten erfolgt eine verstärkte Warnung des Fahrers und falls diese noch immer nicht beachtet wird, greift das Fahrzeug selbständig durch Eingriff in die Motorsteuerung bzw. falls erforderlich aktiven Aufbau von Bremsdruck ein. Selbstverständlich ist die Einschränkung auf eine oder zwei der drei Interventionsmaßnahmen möglich, ebenso die Ergänzung um weitere Stufen.

Vorteilhaft ist zudem eine Integration des Gurtsystems in die Warn- und Eingriffsstrategie. Da es sich in jeder der zuvor genannten Situationen um potentielle Gefahrensituationen handelt, ist eine frühzeitige und reversible Straffung des Gurtes sinnvoll, um den Insassen besser an den Sitz anzubinden. Zudem ist der Einsatz des Gurtes als Teil der Fahrerwarnung/Fahrerinformation und als alternative Wahrnehmungsquelle - nicht akustisch oder visuell, sondern haptisch - vorteilhaft, da diese Warnung nur vom Fahrer wahrgenommen wird, nicht hingegen von weiteren Insassen. Damit wird vermieden, dass die Warnung des Fahrers für die übrigen Insassen irritierend wirken könnte.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische Darstellung eines hypothetischen Straßenverlaufs mit zwei direkt aneinander anschließenden Kurven;
- Figur 2 eine Darstellung des Krümmungsverlaufs der Kurven des Straßenverlaufs in Figur 1;
- Figur 3 den Verlauf der Gurtanzugkraft in einem erfindungsgemäßen und in einem konventionellen Fahrzeugsicherheitsgurtsystem bei Durchfahren des in Figur 1 dargestellten Straßenverlaufs;
- Figur 4 einen weiteren hypothetischen Straßenverlauf mit mehreren Kurven; und
- Figur 5 eine schematische Darstellung eines erfindungsgemäßen Fahrzeugsicherheitsgurtsystems.

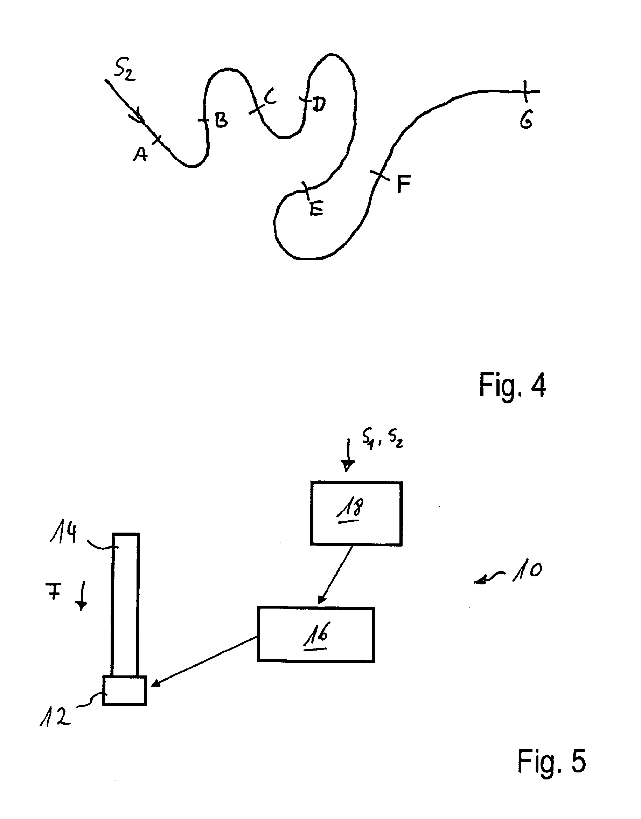

Ein Fahrzeugsicherheitsgurtsystem 10 (schematisch in Figur 5 dargestellt) weist einen reversiblen Gurtstraffer 12 auf, beispielsweise in Form eines an einen Gurtaufroller gekoppelten Elektromotors, der eine Gurtanzugkraft F auf ein Gurtband 14 aufbringen kann, das Teil eines Sicherheitsgurtsystems eines (nicht dargestellten) Fahrzeugs ist. Der Gurtstraffer 12 steht in Verbindung mit einer elektronischen Steuereinheit 16, die ein Kraftniveau der Gurtanzugkraft F vorgeben kann. Die Steuereinheit 16 wiederum ist mit einer Vorrichtung 18 zur Erfassung eines Straßenverlaufs verbunden, die Daten über den vor dem Fahrzeug liegenden Straßenverlauf liefert.

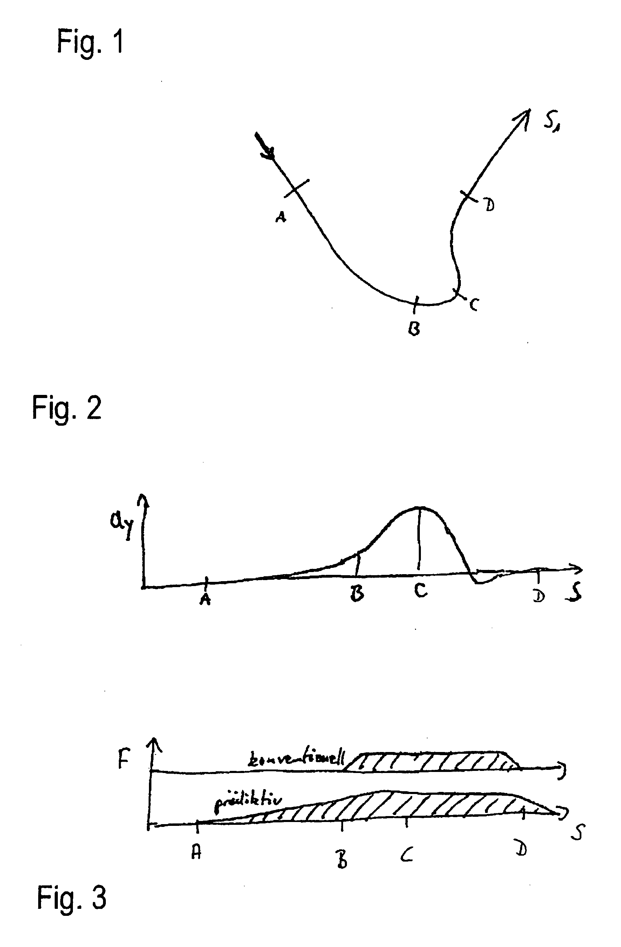

Ein erster hypothetischer Straßenverlauf S₁ ist in Figur 1 dargestellt.

Der Straßenverlauf S₁ zeigt zwei Kurven, die direkt aneinander anschließen, nämlich eine scharfe Linkskurve, die von einer flachen Rechtskurve gefolgt ist. Im Folgenden wird die Krümmung der ersten Kurve als positiv und die der zweiten Kurve als negativ angesehen. Die erste Kurve weist im Punkt C den größten Krümmungsradius des gesamten Straßenverlaufs S₁ auf. Der Krümmungsverlauf der Strecke S₁ ist in Figur 2 dargestellt.

Die Vorrichtung 18 zur Erfassung des Straßenverlaufs ermittelt die Daten des Straßenverlaufs S₁ vorausschauend beispielsweise etwa 10 bis 300m vor dem Fahrzeug und überträgt sie an die Steuereinheit 16. Hierzu weist die Vorrichtung 18 ein GPS auf, über das der aktuelle Standpunkt des Fahrzeugs mit einer Genauigkeit von wenigen Metern bestimmbar ist. Die Vorrichtung 18 weist außerdem Kartenmaterial auf, aus dem der Straßenverlauf S₁ hervorgeht. Aus dem Standort des Fahrzeugs sowie dem Straßenverlauf S₁ errechnet die Steuereinheit 16 den Verlauf der Krümmung inklusive des Punktes mit der größten Krümmung (in diesem Fall Punkt C), sowie einen Punkt A, der vor Beginn der ersten Kurve liegt und bei dessen Passieren eine Steigerung der Gurtanzugkraft F beginnen soll.

Die untere Kurve ("prädiktiv") in Figur 3 zeigt den Verlauf der Gurtanzugkraft F, die in diesem Beispiel vom Gurtstraffer 12 auf das Gurtband 14 aufgebracht wird. Bei Durchfahren des Punktes A beginnt eine langsame Steigerung der Gurtanzugkraft F. Jegliche Veränderung der Gurtanzugkraft F erfolgt stetig und so langsam, dass sie für den Fahrzeuginsassen kaum wahrnehmbar ist und auf jeden Fall als angenehm empfunden wird. Die Gurtanzugkraft F ist bereits signifikant erhöht, bevor das Fahrzeug in die Kurve einfährt und der Fahrzeuginsasse eine seitliche Beschleunigung aufgrund der Fliehkräfte erfährt. Die Gurtanzugkraft F erreicht ihr höchstes Niveau bereits vor dem Erreichen der Stelle mit der stärksten Kurvenkrümmung (Punkt C). Bis zum Erreichen dieses Punktes steigert sich die Gurtanzugkraft F stetig, was hier auch analog zur Steigerung des Krümmungsradius der gerade durchfahrenen Kurve ist. Auf diese Weise erfährt der Fahrzeuginsasse eine Kompensierung der Querbeschleunigungskräfte in der Kurve, und seine seitliche Verlagerung wird minimiert. Sein Seitenhalt im Sitz wird deutlich erhöht. Nach dem Passieren des Punktes C wird die Gurtanzugkraft F allmählich verringert, in Abhängigkeit vom Krümmungsradius der Kurve, der nun wieder abnimmt.

Da der Straßenverlauf vor dem Fahrzeug bekannt ist und somit auch bekannt ist, dass sich eine weitere Kurve an die gerade durchfahrene Kurve anschließt, wird die Gurtanzugkraft F von der Steuereinheit 16 auf einem erhöhten Niveau gehalten, bis der Punkt D passiert ist, der im Straßenverlauf S₁ das Ende der zweiten Kurve markiert und nach dem ein gerader Straßenabschnitt beginnt.

Bei einem konventionellen, sensorgesteuerten Komfortsystem, wie es in der oberen Kurve ("konventionell") in Figur 3 dargestellt ist, würde die Steigerung der Gurtanzugkraft F erst erfolgen, wenn am Punkt B ein gewisser Schwellenwert der Querbeschleunigung bereits überschritten ist. Ein herkömmliches System hat auch keine Möglichkeit, auf den Krümmungsradius der Kurve zu reagieren, sodass eine fest voreingestellte Gurtanzugkraft F über den gesamten Verlauf der Kurve beibehalten wird. Nach Unterschreiten des Schwellwertes (nicht markiert) wird das Niveau der Gurtanzugkraft F noch für eine vorbestimmte Zeit aufrechterhalten, um dem Fahrzeuginsassen beim Ausfahren aus der Kurve noch das Gefühl des sicheren Zurückgehaltenwerdens zu geben.

In Figur 4 ist ein zweiter hypothetischer Straßenverlauf S₂ mit diversen, aneinander anschließenden scharfen Kurven dargestellt. In diesem Fall wird erfindunggemäß die Gurtanzugkraft F ab dem Punkt A vor Beginn der ersten Kurve erhöht und erst ab dem Punkt G, der das Ende der Kurvenstrecke markiert, wieder auf das normale Niveau für einen geraden Streckenverlauf ohne unmittelbare Gefährdung für das Fahrzeug zurückgestellt. Das Niveau der Gurtanzugkraft F kann im Verlauf der Strecke zwischen den Punkten A und G variiert werden, in Abhängigkeit der jeweiligen maximalen Krümmung der gerade durchfahrenen Kurve, es kann aber auch ein gleichbleibendes Niveau gewählt werden, das auf den höchsten Krümmungsgrad aller Kurven in diesem Streckenabschnitt angepasst ist, um Schwankungen in der Gurtanzugkraft F, die den Fahrzeuginsassen stören könnten, zu vermeiden.

Zusätzlich oder alternativ zum verwendeten GPS- und Navigationssystem mit Kartenmaterial kann die Vorrichtung 18 zur Erfassung des Straßenverlaufs auch eine Videokamera oder ein LIDAR-System (light detection and ranging system) aufweisen. Die Videokamera bzw. das LIDAR erfassen in diesem Fall eine Fahrbahnmarkierung, beispielsweise am Rand der Fahrbahn oder einen Mittelstreifen oder auch Markierungsbaken am Rand der Fahrbahn. Die Steuereinheit 16 berechnet aus diesen Daten den Straßenverlauf vor dem Fahrzeug. Die Ansteuerung des Gurtstraffers 12 erfolgt dann wie für das GPS-System beschrieben.

Das beschriebene System lässt sich natürlich mit einer Ansteuerung des Gurtstraffers 12 aufgrund von aktuellen Fahrzustandsgrößen wie Querbeschleunigung oder Gierrate kombinieren.

## Patentansprüche

1. Fahrzeugsicherheitsgurtsystem mit einem reversiblen Gurtstraffer (12), der eine Gurtanzugkraft (F) in einem oder mehreren vorbestimmten Niveaus auf ein Gurtband (14) eines Sicherheitsgurtes aufbringen kann,
einer Steuereinheit (16) zur Ansteuerung des Gurtstraffers (12) und
einer Vorrichtung (18) zur Erfassung eines Straßenverlaufs (S₁, S₂) vor dem Fahrzeug und zur Erkennung von vor dem Fahrzeug liegenden Kurven,
**dadurch gekennzeichnet, dass** die Steuereinheit (16) veranlasst, die Gurtanzugkraft (F) auf einem erhöhten Niveau zu halten, wenn sich im Straßenverlauf an eine gerade durchfahrene Kurve in einer vorbestimmten Distanz eine weitere Kurve anschließt.

2. Fahrzeugsicherheitsgurtsystem nach Anspruch 1, **dadurch gekennzeichnet, dass** die Steuereinheit (16) in Abhängigkeit vom ermittelten Straßenverlauf (S₁, S₂) bereits ein Einsetzen der Tätigkeit des Gurtstraffers (12) zur Erhöhung der Gurtanzugkraft (F) veranlasst, bevor das Fahrzeug in eine Kurve einfährt.

3. Fahrzeugsicherheitsgurtsystem nach einem der vorhergehenden Ansprüche, **dadurch gekennzeichnet, dass** sich die vom Gurtstraffer (12) aufgebrachte Gurtanzugkraft (F) stetig verändert.

4. Fahrzeugsicherheitsgurtsystem nach einem der vorhergehenden Ansprüche, **dadurch gekennzeichnet, dass** aus den Daten der Vorrichtung (18) zur Erfassung des Straßenverlaufs eine maximale Krümmung der Kurve bestimmt wird.

5. Fahrzeugsicherheitsgurtsystem nach einem der vorhergehenden Ansprüche, **dadurch gekennzeichnet, dass** die Daten aus der Vorrichtung (18) zur Erfassung des Straßenverlaufs mit der aktuellen Fahrgeschwindigkeit des Fahrzeugs abgeglichen werden und darauf basierend eine erreichbare Querbeschleunigung des Fahrzeugs für die zu durchfahrende Kurve errechnet wird.

6. Fahrzeugsicherheitsgurtsystem nach Anspruch 5, **dadurch gekennzeichnet, dass** die Steuereinheit veranlasst, die Gurtanzugskraft (F) zu erhöhen, wenn die errechnete, erreichbare Querbeschleunigung des Fahrzeugs einen vorbestimmten Wert übersteigt.

7. Fahrzeugsicherheitsgurtsystem nach Anspruch 6, **dadurch gekennzeichnet, dass** die Erhöhung der Gurtanzugskraft in mindestens zwei aufeinander folgenden Schritten mit ansteigender Intensität erfolgt.

8. Fahrzeugsicherheitsgurtsystem nach einem der vorhergehenden Ansprüche, **dadurch gekennzeichnet, dass** die Vorrichtung (18) zur Erfassung des Straßenverlaufs einen Empfänger für GNSS-Daten (Globales Navigations-Satelliten System) und Kartendaten der gerade befahrenen Strecke umfasst.

9. Fahrzeugsicherheitsgurtsystem nach einem der vorhergehenden Ansprüche, **dadurch gekennzeichnet, dass** die Vorrichtung (18) zur Erfassung des Straßenverlaufs eine Videokamera und Mittel zur Bestimmung eines Verlaufs wenigstens einer Fahrbahnmarkierung vor dem Fahrzeug aus den Videodaten umfasst.

10. Fahrzeugsicherheitsgurtsystem nach einem der vorhergehenden Ansprüche, **dadurch gekennzeichnet, dass** die Vorrichtung (18) zur Erfassung des Straßenverlaufs ein LIDAR-Gerät und Mittel zur Bestimmung eines Verlaufs wenigstens einer Fahrbahnmarkierung vor dem Fahrzeug aus den LIDAR-Daten umfasst.

## Claims

1. A vehicle seat belt system comprising a reversible belt tensioner (12) adapted to apply a belt tightening force (F) on one or more predetermined levels to a belt strap (14) of a seat belt,
a control unit (16) for controlling the belt tensioner (12) and
a device (18) for detecting the course of a road (S₁, S₂) ahead of the vehicle and for identifying bends lying ahead of the vehicle,
**characterized in that** the control unit (16) causes the belt tightening force (F) to be kept on an increased level, when in the course of the road a further bend follows a just taken bend within a predetermined distance.

2. The vehicle seat belt system according to claim 1, **characterized in that** in response to the detected course of the road (S₁, S₂) the control unit (16) already causes the belt tensioner (12) to start acting in order to increase the belt tightening force (F) before the vehicle is taking a bend.

3. The vehicle seat belt system according to claim 1, **characterized in that** the belt tightening force (F) applied by the belt tensioner (12) continuously varies.

4. The vehicle seat belt system according to claim 1, **characterized in that** on the basis of the data of the device (18) for detecting the course of the road a maximum curvature of the bend is determined.

5. The vehicle seat belt system according to claim 1, **characterized in that** the data from the device (18) for detecting the course of the road are compared to the current driving speed of the vehicle and, based thereon, an achievable transverse acceleration of the vehicle for the bend to be taken is calculated.

6. The vehicle seat belt system according to claim 5, **characterized in that** the control unit causes the belt tightening force (F) to be increased when the calculated achievable transverse acceleration of the vehicle exceeds a predetermined value.

7. The vehicle seat belt system according to claim 6, **characterized in that** the belt tightening force is increased by at least two successive steps of increasing intensity.

8. The vehicle seat belt system according to claim 1, **characterized in that** the device (18) for detecting the course of the road comprises a receiver for GNSS (Global Navigation Satellite System) data and road map data of the currently taken road.

9. The vehicle seat belt system according to claim 1, **characterized in that** the device (18) for detecting the course of the road comprises a video camera and means for determining the course of at least one road marking ahead of the vehicle from the video data.

10. The vehicle seat belt system according to claim 1, **characterized in that** for detecting the course of the road the device (18) comprises a LIDAR apparatus and means for determining the course of at least one road marking ahead of the vehicle from the LIDAR data.

## Revendications

1. Système de ceinture de sécurité de véhicule comportant un prétensionneur réversible (12), qui peut appliquer une force de rétention (F) à un ou plusieurs niveaux prédéterminés grâce à une sangle (14) de ceinture de sécurité
une unité de commande (16) pour piloter le dispositif de prétension (12) et
un dispositif (18) destiné à détecter la trajectoire de la route (S₁, S₂) devant le véhicule et pour la reconnaissance des virages arrivant devant le véhicule, **caractérisé en ce que** l'unité de commande (16) est amené à maintenir la force de rétention (F) à un niveau élevé, si il se présente sur la trajectoire une autre courbe à une distance pré-determinée de la courbe parcourue par le véhicule.

2. Système de ceinture de sécurité de véhicule selon la revendication 1, **caractérisé en ce que** l'unité de commande (16) pilote, en fonction de la trajectoire déterminée de la route (S₁, S₂) le fonctionnement du prétensionneur (12) pour augmenter la force de rétention (F), avant que le véhicule ne pénètre dans une courbe.

3. Système de ceinture de sécurité de véhicule selon l'une quelconque des revendications précédentes, **caractérisé en ce que** le dispositif de serrage par la ceinture (12) appliquée à la force de rétention (F) est modifié en continu.

4. Système de ceinture de sécurité de véhicule selon l'une quelconque des revendications précédentes, **caractérisé en ce que** les données provenant du dispositif (18) destinées à la détection d'une courbure maximale du virage au cours de la trajectoire, sont définies.

5. Système de ceinture de sécurité de véhicule selon l'une quelconque des revendications précédentes, **caractérisé en ce que** les données du dispositif (18) destinées à la détection de la trajectoire couplées avec la vitesse actuelle du véhicule peuvent être réglées et, qui sur la base de l'accélération latérale atteignable du véhicule pour la courbe à parcourir sont calculées.

6. Système de ceinture de sécurité de véhicule selon la revendication 5, **caractérisé en ce que** l'unité de commande fait augmenter la force de rétention (F), si la valeur calculée à partir l'accélération latérale atteignable du véhicule dépasse une valeur prédéterminée.

7. Système de ceinture de siège de véhicule selon la revendication 6, **caractérisé en ce que** l'augmentation de la force de rétention suit au moins deux étapes successives avec une intensité croissante.

8. Système de ceinture de sécurité de véhicule selon l'une quelconque des revendications précédentes, **caractérisé en ce que** le dispositif (18) destiné à la détection de la trajectoire de la route contient un récepteur de Données GNSS (Global Navigation Satellite System), et des données cartographiques de l'itinéraire parcouru.

9. Système de ceinture de sécurité de véhicule selon l'une quelconque des revendications précédentes, **caractérisé en ce que** le dispositif (18) destiné à la détection de la trajectoire, comprend une caméra vidéo et un moyen pour déterminer la trajectoire au moins à l'aide des données vidéos du marquage routier devant le véhicule.

10. Système de ceinture de siège de véhicule selon l'une quelconque des revendications précédentes, **caractérisé en ce que** le dispositif (18) destiné à la détection de la trajectoire comprend un appareil LIDAR et un moyen pour déterminer la trajectoire au moins à l'aide des données LIDAR du marquage routier devant le véhicule.
